# EUROPÄISCHE PATENTANMELDUNG

(11) **EP 3 461 313 A1**
(43) Veröffentlichungstag der Anmeldung: **03.04.2019**
(21) Anmeldenummer: 18185688.1
(22) Anmeldetag: 26.07.2018
(51) Int. Cl.: A01D 34/00, A01B 71/02, A01B 63/111, A01B 69/00, A01B 71/06, A01F 15/08, A01D 78/10

(54) **LANDWIRTSCHAFTLICHE ARBEITSMASCHINE**

(30) Priorität: 28.09.2017 DE 102017122645
(71) Anmelder: CLAAS E-Systems KGaA mbH & Co KG, 49201 Dissen a.T.W. (DE)
(72) Erfinder: Jeninga, Jasper, 88447 Warthausen (DE); Neuhauser, Markus, 88489 Wain (DE)
(74) Vertreter: Budach, Steffen

(57) **Zusammenfassung**

Die Erfindung betrifft eine landwirtschaftliche Arbeitsmaschine mit einer Zugmaschine (2), insbesondere einem Traktor, und mit einem landwirtschaftlichen Anbaugerät (3) umfassend mindestens ein angetriebenes Arbeitsorgan (4) zur Bearbeitung eines Feldbestands (5). Es wird vorgeschlagen, dass eine Sensoreinrichtung (8) im Vorfeld des mindestens einen Arbeitsorgans (4) des Anbaugeräts (3) die Beschaffenheit des Feldbestands (5) erfasst und in Abhängigkeit von der erfassten Beschaffenheit eine Anpassung mindestens eines Parameters des Arbeitsorgans (4) oder mindestens eines der Arbeitsorgane (4) erfolgt, wobei der Parameter oder mindestens einer der Parameter die Antriebsdrehzahl des jeweiligen Arbeitsorgans (4) ist.

## Beschreibung

Die Erfindung betrifft eine landwirtschaftliche Arbeitsmaschine mit den Merkmalen des Oberbegriffs von Anspruch 1 sowie ein Verfahren für die Ansteuerung einer landwirtschaftlichen Arbeitsmaschine mit den Merkmalen des Oberbegriffs von Anspruch 10.

Bei der in Rede stehenden landwirtschaftlichen Arbeitsmaschine kann es sich um jedwede landwirtschaftliche Arbeitsmaschine handeln, die ein Anbaugerät aufweist und der Abarbeitung eines landwirtschaftlichen Arbeitsauftrags dient. Dazu gehören beispielsweise mit landwirtschaftlichen Anbaugeräten ausgestattete Zugmaschinen, insbesondere Traktoren, aber auch Erntemaschinen wie Mähdrescher, Feldhäcksler oder dergleichen. Vorliegend stehen Zugmaschinen mit Anbaugeräten im Vordergrund.

Im Rahmen der zunehmenden Automatisierung landwirtschaftlicher Arbeitsmaschinen werden diese inzwischen häufig mit Sensoranordnungen ausgestattet, um den Bediener beim Fahren und bei der Verrichtung landwirtschaftlicher Arbeit zu unterstützen. Insbesondere können Anbaugeräte der landwirtschaftlichen Arbeitsmaschine, das heißt Geräte, die zur Verrichtung oder Unterstützung landwirtschaftlicher Arbeit an das Trägerfahrzeug angebaut sind, auf diese Weise überwacht und gesteuert werden. Zu den Anbaugeräten zählen insbesondere Mähwerke, Wender, Schwader, Ballenpressen oder Bodenbearbeitungsgeräte wie Pflüge, Grubber, Eggen oder dergleichen.

Die bekannte landwirtschaftliche Arbeitsmaschine (US 2013/0340401 A1), von der die Erfindung ausgeht, weist als Anbaugerät ein Mähwerk auf, das mehrere elektrisch angetriebene, rotierende Messereinheiten aufweist. Eine Sensoreinrichtung überwacht hier die Schnittqualität und Effizienz, die jeweils aufgrund einer sich ändernden Bestandsdichte variieren kann, und bewirkt im Bedarfsfall über eine geräteseitige Steuer- und Regeleinheit eine individuelle Einstellbarkeit der einzelnen Messereinheiten als Arbeitsorgane. Nachteilig bei der bekannten Arbeitsmaschine ist allerdings, dass bereits ein vergleichsweise großer Teil des Erntebestands mit einer verminderten Schnittqualität oder einer verminderten Effizienz abgeerntet worden ist, bevor die Parametereinstellungen der Messereinheiten optimiert worden sind.

Der Erfindung liegt das Problem zugrunde, die bekannte landwirtschaftliche Arbeitsmaschine derart auszugestalten und weiterzubilden, dass eine effizientere Optimierung von Parametern angetriebener Arbeitsorgane eines Anbaugeräts gewährleistet wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass durch Vorsehen einer Sensoreinrichtung, die bereits im Vorfeldbereich, also im Bereich in Fahrtrichtung vor dem Anbaugerät, die Beschaffenheit des Feldbestands erfasst, Änderungen im Feldbestand, die die Schnittqualität und Effizienz beeinflussen, frühzeitig erkannt werden können. Daraufhin können notwendige Optimierungsmaßnahmen deutlich eher als im Stand der Technik vorgenommen werden. Bevorzugt können notwendige Anpassungen von Parametern bereits bei Erreichen der erfassten Änderung im Feldbestand vorgenommen werden oder sogar schon abgeschlossen sein. Der Feldbestand kann damit insgesamt mit einer deutlich besseren Schnittqualität und Effizienz als im Stand der Technik bearbeitet werden.

Im Einzelnen ist dazu bei der vorschlagsgemäßen landwirtschaftlichen Arbeitsmaschine vorgesehen, dass eine Sensoreinrichtung im Vorfeld des mindestens einen Arbeitsorgans des Anbaugeräts die Beschaffenheit des Feldbestands erfasst und in Abhängigkeit von der erfassten Beschaffenheit eine Anpassung mindestens eines Parameters des Arbeitsorgans oder mindestens eines der Arbeitsorgane erfolgt, wobei der Parameter oder mindestens einer der Parameter die Antriebsdrehzahl des jeweiligen Arbeitsorgans ist.

Grundsätzlich können abhängig vom verwendeten Anbaugerät und/oder vom durchzuführenden landwirtschaftlichen Arbeitsauftrag auch noch andere Parameter des mindestens einen Arbeitsorgans angepasst werden, beispielsweise der Abstand des Arbeitsorgans zum Untergrund (Bodenabstand), die Position des jeweiligen Arbeitsorgans quer zur Fahrtrichtung, der Winkel des jeweiligen Arbeitsorgans relativ zur Bodenoberfläche und/oder relativ zur Fahrtrichtung, die Messerstellung innerhalb einer Messereinheit, um nur einige Beispiele zu nennen.

Die Beschaffenheit des Feldbestands, die von der Sensoreinrichtung erfasst werden kann, ist insbesondere die Bestandsdichte von ungeerntetem Erntegut, kann aber grundsätzlich auch die Gutdichte von auf dem Untergrund abgelegtem, geerntetem Erntegut und/oder die Beschaffenheit des Untergrunds sein (Anspruch 2). Durch die Erfassung der Beschaffenheit des Untergrunds können beispielsweise Bodenunebenheiten erkannt werden, auf die rechtzeitig durch eine Verstellung des Bodenabstands des jeweiligen Arbeitsorgans reagiert werden kann.

Nach der Ausgestaltung gemäß Anspruch 3 kann es sich bei dem Anbaugerät um ein in Fahrtrichtung vorne oder hinten angebautes Anbaugerät handeln. Insbesondere Mähwerke können vorne oder hinten an der Zugmaschine angebaut werden. Denkbar ist dabei auch, dass sowohl vorne als auch hinten jeweils ein Anbaugerät, beispielsweise ein Mähwerk, angebaut ist und eine Anpassung des oder der Parameter(s) des jeweiligen Arbeitsorgans individuell für das vordere und das hintere Anbaugerät erfolgt.

Neben einem Mähwerk kann als Anbaugerät auch ein Wender, ein Schwader, eine Ballenpresse oder ein Bodenbearbeitungsgerät vorgesehen sein (Anspruch 4). Bei dem Arbeitsorgan des Anbaugeräts, dessen Parameter angepasst werden kann/können, kann es sich entsprechend um eine Messereinheit, insbesondere eine sich rotierend oder translatorisch bewegende Messereinheit, eines Mähwerks, eine Kreiseleinheit eines Wenders oder Schwaders, eine Presseinheit einer Ballenpresse oder eine Bodenbearbeitungseinheit eines Bodenbearbeitungsgeräts, beispielsweise um rotierend angetriebene Elemente einer Egge oder dergleichen, handeln.

Anspruch 5 definiert verschiedene Ausgestaltungen der Sensoreinrichtung.

In den Ansprüchen 6 und 7 sind verschiedene Möglichkeiten definiert, wie die Anpassung des mindestens einen Parameters des Arbeitsorgans erfolgen kann. So wird bevorzugt im Bedarfsfall eine notwendige Anpassung des jeweiligen Parameters automatisch durchgeführt (Anspruch 6), kann grundsätzlich aber auch nach Anzeigen eines entsprechenden Hinweises von dem Bediener bewirkt werden (Anspruch 7). Dies gilt insbesondere für die Verstellung der Antriebsdrehzahl des jeweiligen Arbeitsorgans, kann grundsätzlich aber auch für die Verstellung weiterer Parameter des Arbeitsorgans gelten.

Anspruch 8 definiert verschiedene Möglichkeiten, wie die Regelung der Antriebsdrehzahl und/oder des mindestens einen weiteren Parameters bewirkt werden kann.

Anspruch 9 definiert bevorzugte Anbauorte für die einzelnen Komponenten, die notwendig sind, um die Anpassung des mindestens einen Parameters des Arbeitsorgans zu ermöglichen. Beispielsweise ist die Sensoreinrichtung bevorzugt Bestandteil des Anbaugeräts und die Steuer- und Regeleinheit Bestandteil der Zugmaschine.

Nach einer weiteren Lehre gemäß Anspruch 10, der eigenständige Bedeutung zukommt, wird ein Verfahren für die Ansteuerung der vorschlagsgemäßen landwirtschaftlichen Arbeitsmaschine als solches beansprucht.

Wesentlich nach dem vorschlagsgemäßen Verfahren ist, dass eine Sensoreinrichtung im Vorfeld des mindestens einen Arbeitsorgans des Anbaugeräts die Beschaffenheit des Feldbestands erfasst und in Abhängigkeit von der erfassten Beschaffenheit eine Anpassung mindestens eines Parameters des Arbeitsorgans oder mindestens eines der Arbeitsorgane erfolgt, wobei der Parameter oder mindestens einer der Parameter die Antriebsdrehzahl des jeweiligen Arbeitsorgans ist.

Im Folgenden wird die Erfindung anhand einer lediglich Ausführungsbeispiele darstellenden Zeichnung näher erläutert. In der Zeichnung zeigt
- Fig. 1: ein erstes Ausführungsbeispiel einer vorschlagsgemäßen landwirtschaftlichen Arbeitsmaschine in einer ganz schematischen Darstellung und
- Fig. 2: ein zweites Ausführungsbeispiel einer vorschlagsgemäßen landwirtschaftlichen Arbeitsmaschine in einer ganz schematischen Darstellung.

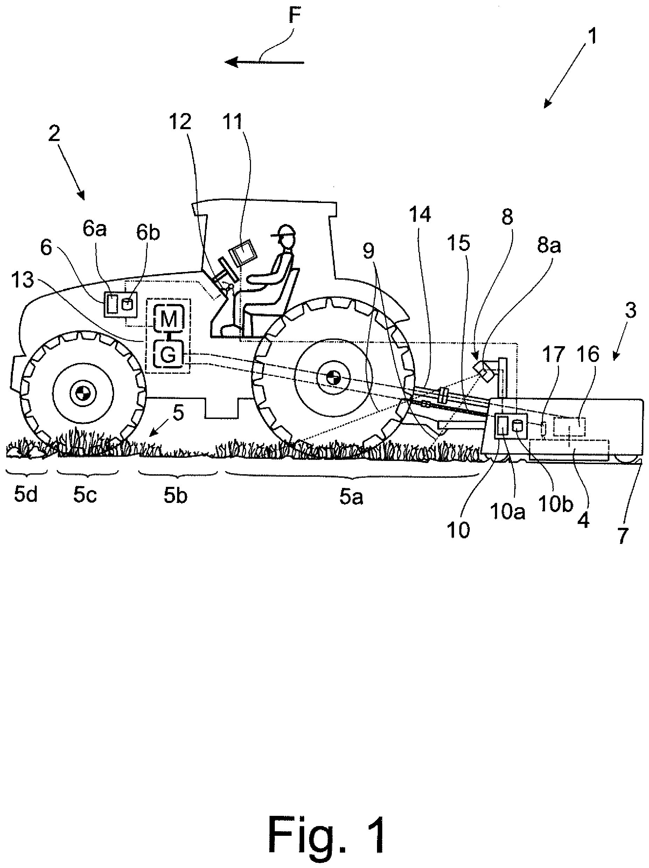

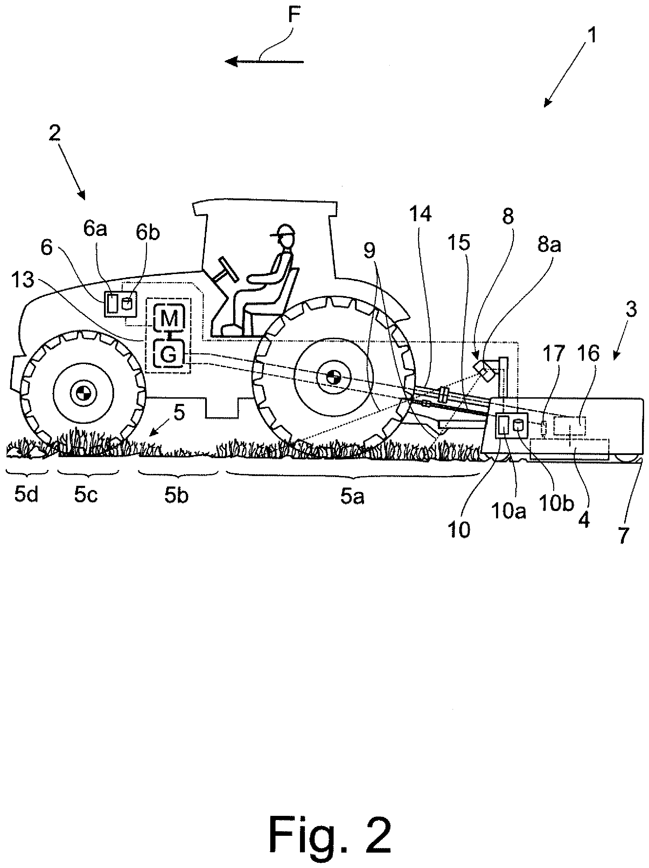

Die vorschlagsgemäße Lösung lässt sich auf einen weiten Bereich landwirtschaftlicher Arbeitsmaschinen anwenden. Dazu gehören mit Anbaugeräten ausgestattete Zugmaschinen, insbesondere Traktoren, sowie Erntemaschinen, insbesondere Mähdrescher, Feldhäcksler oder dergleichen. Bei dem jeweils in Fig. 1 und in Fig. 2 dargestellten und insoweit bevorzugten Ausführungsbeispiel handelt es sich bei der landwirtschaftlichen Arbeitsmaschine 1 um eine Zugmaschine 2, hier in Form eines Traktors, die beziehungsweise der in an sich üblicher Weise mit einem landwirtschaftlichen Anbaugerät 3 ausgestattet ist. Bei dem landwirtschaftlichen Anbaugerät 3 handelt es sich hier lediglich beispielhaft um ein Mähwerk. Das Anbaugerät 3 ist hier bezogen auf die Fahrtrichtung F hinten an der Zugmaschine 2 angebaut, wobei aber auch Anbaugeräte denkbar sind, die vorne an der Zugmaschine 2 angebaut sein können. Das Anbaugerät 3 weist hier mehrere angetriebene Arbeitsorgane 4 zur Bearbeitung eines Feldbestands 5 auf, bei denen es sich insbesondere um Messereinheiten des Mähwerks handelt. Die Ausführungen zu der mit dem Anbaugerät 3 ausgestatteten Zugmaschine 2 gelten für alle anderen Arten von landwirtschaftlichen Arbeitsmaschinen bzw. landwirtschaftlichen Anbaugeräten entsprechend.

Die Zugmaschine 2 und das Anbaugerät 3 werden von einem Bediener, dem Fahrer, bedient, wobei als Bedienerunterstützung eine Steuer- und Regeleinheit 6 in der Zugmaschine 2 vorgesehen ist, deren genaue Funktionsweise im Folgenden noch näher erläutert wird. Grundsätzlich dient die Steuer- und Regeleinheit 6, die einen Prozessor 6a und einen Datenspeicher 6b aufweisen kann, hier dazu, eine Regelung mindestens eines Parameters, zumindest der Antriebsdrehzahl, der Arbeitsorgane 4 zu bewirken. Weitere entsprechend regelbare Parameter der Arbeitsorgane 4 sind hier und vorzugsweise der Bodenabstand, die Position quer zur Fahrtrichtung F, der Winkel relativ zum Untergrund 7 und/oder relativ zur Fahrtrichtung F und/oder die Messerstellung in der Messereinheit.

Die besagte Anpassung bzw. Regelung des Parameters "Antriebsdrehzahl" sowie insbesondere auch des oder der weiteren Parameter erfolgt in Abhängigkeit von einer sensorisch erfassten Beschaffenheit des Feldbestands 5. Dazu ist eine Sensoreinrichtung 8 vorgesehen, die den Bereich des Feldbestands 5 in Fahrtrichtung F vor dem Anbaugerät 3, also das sogenannte Vorfeld, erfasst. Bei der Beschaffenheit des Feldbestands 5, die hier von der Sensoreinrichtung 8 erfasst wird, handelt es sich im vorliegenden Ausführungsbeispiel um die Bestandsdichte des ungeernteten Ernteguts, bei dem es sich hier beispielhaft um Gras handelt. Die Beschaffenheit des Feldbestands 5 umfasst hier auch die Beschaffenheit des Untergrunds 7. In anderen Anwendungsfällen, wenn es sich bei dem Anbaugerät 3 beispielsweise um einen Wender oder Schwader handelt, kann die Beschaffenheit des Feldbestands 5 auch die Gutdichte von dem auf dem Untergrund 7 abgelegten, geernteten Erntegut umfassen.

Im vorliegenden Fall sind hier beispielhaft vier unterschiedliche Abschnitte 5a-5d des Feldbestands 5 dargestellt, die jeweils eine andere Beschaffenheit aufweisen. Die Beschaffenheit des Feldbestands 5 im Abschnitt 5a ist hier beispielsweise eine durchschnittliche Beschaffenheit, das heißt die Wuchshöhe und Wuchsdichte der Pflanzen, die zusammen die Bestandsdichte kennzeichnen, sind hier durchschnittlich und der Untergrund 7 ist vergleichsweise eben. Im Abschnitt 5b weist der Feldbestands 5 eine im Vergleich dazu geringere Bestandsdichte auf. Im Abschnitt 5c ist die Bestandsdichte wiederum überdurchschnittlich hoch. Der Abschnitt 5d weist wiederum zwar eine durchschnittliche Bestandsdichte auf, ist hier aber durch einen besonders unebenen Untergrund 7 gekennzeichnet.

Der Feldbestand 5 bzw. dessen Beschaffenheit werden nun von der Sensoreinrichtung 8 erfasst. Die Sensoreinrichtung 8 weist dazu einen Sensor 8a auf, dessen Erfassungsbereich 9 hier auf den Abschnitt 5a gerichtet ist. Grundsätzlich können auch mehrere Sensoren 8a vorgesehen sein. Bei dem oder den Sensoren 8a kann es sich um einen optischen Sensor, Ultraschallsensor, Radarsensor und/oder Lidar-Sensor handeln.

Die beiden Ausführungsbeispiele in den Figuren 1 und 2 unterscheiden sich nun dadurch, dass in Fig. 1 die Regelung bzw. Anpassung des jeweiligen Parameters, hier konkret der Antriebsdrehzahl des Arbeitsorgans 4 und des Winkels des Arbeitsorgans 4 relativ zum Untergrund 7 und zur Fahrtrichtung F, vom Bediener bewirkt wird, wohingegen dies gemäß Fig. 2 automatisch erfolgt. Beiden Ausführungsbeispielen ist zunächst gemein, dass die Sensoreinrichtung 8 der erfassten Beschaffenheit des Feldbestands 5 entsprechende Sensordaten generiert und diese an eine Rechnereinheit 10 überträgt, die hier einen Prozessor 10a und einen Speicher 10b aufweist. In dem Speicher 10b sind nun Datenpaare, Kennlinien, Kennfelder oder dergleichen hinterlegt, die Sensorwerten bzw. Sensorwertebereichen jeweils bestimmte Sollwerte für den zu regelnden Parameter zuordnen. Hier können beispielsweise bestimmten der Bestandsdichte entsprechenden Sensorwerten oder -wertebereichen jeweils unterschiedliche Sollwerte für die Antriebsdrehzahl der Arbeitsorgane 4 oder für deren Winkel relativ zum Untergrund 7 und/oder zur Fahrtrichtung F zugeordnet sein. Entsprechende Zuordnungen sind auch für Sensorwerte oder - wertebereiche denkbar, die der Beschaffenheit des Untergrunds 7 entsprechen. Die Rechnereinheit 10 ermittelt auf diese Weise basierend auf den Sensordaten der Sensoreinrichtung 8 einen Sollwert für den jeweiligen zu regelnden Parameter, hier beispielsweise für die Antriebsdrehzahl und den Winkel relativ zum Untergrund 7 und/oder relativ zur Fahrtrichtung F der Arbeitsorgane 4.

Bei dem in Fig. 1 dargestellten Ausführungsbeispiel wird dann dem Bediener auf einer Anzeigeeinheit 11 in Abhängigkeit des Sollwerts eine Information bzw. ein Hinweis angezeigt, woraufhin der Bediener dann eine Bedieneinheit 12 die Regelung des jeweiligen Parameters der Arbeitsorgane 4 bewirken kann. Bei der angezeigten Information handelt es sich beispielsweise um den Sollwert selbst oder um das Ergebnis eines Vergleichs des Sollwerts mit einem aktuellen Istwert. Entsprechende Istwerte für den jeweiligen Parameter, beispielsweise die Antriebsdrehzahl und/oder den Winkel des des Arbeitsorgans 4 bzw. der Arbeitsorgane 4, können ebenfalls über eine Sensoreinrichtung (nicht dargestellt) ermittelt werden. Über die Bedieneinheit 12, die hier beispielhaft als Bedienhebel ausgeführt ist, wird dann ein entsprechender Befehl an die Steuer-und Regeleinheit 6 gesendet, die daraufhin den Hauptantrieb 13 der Zugmaschine 2, insbesondere den Motor M und/oder das Getriebe G, so regelt, dass der jeweilige Sollwert für den zu regelnden Parameter der Arbeitsorgane 4 erreicht werden kann.

Über eine Regelung des Motors M und/oder Getriebes G kann hier dann eine Regelung der Drehzahl der Zapfwelle 14 der Zugmaschine 2 und/oder eine Regelung der Volumenströme eines Hydraulikmediums in einem Hydraulikkreislauf 15 erfolgen. Zusätzlich oder alternativ kann auch die Leistungsabgabe eines elektrischen Antriebs (nicht dargestellt) über die Steuer- und Regeleinheit bewirkt werden. Die Regelung der Zapfwellendrehzahl, der Volumenströme des Hydraulikmediums und/oder der Leistungsabgabe des elektrischen Antriebs bewirkt dann schließlich die Regelung des jeweiligen Parameters der Arbeitsorgane 4. In den vorliegenden Ausführungsbeispielen wird beispielsweise durch eine Änderung der Zapfwellendrehzahl der anbaugeräteseitige Antrieb 16 der Arbeitsorgane 4, hier der Messereinheiten, entsprechend geändert. Über eine Änderung der Volumenströme des Hydraulikmediums wird hier beispielsweise ein anbaugeräteseitiger Hydraulikzylinder 17 angesteuert, über den eine Winkelverstellung der Arbeitsorgane 4 ermöglicht wird.

Das Ausführungsbeispiel in Fig. 2 unterscheidet sich nun von dem vorangehend beschriebenen Ausführungsbeispiel dadurch, dass hier die Anpassung bzw. Regelung des jeweiligen Parameters der Arbeitsorgane 4 automatisch erfolgt, ohne dass hier der Bediener eingreifen muss. So bewirkt hier die Steuer-und Regeleinheit 6 in Abhängigkeit des jeweiligen Sollwerts automatisch die Regelung der Antriebsdrehzahl und des oder der weiteren Parameter der Arbeitsorgane 4.

Abschließend sei angemerkt, dass bei den hier beschriebenen und in den Figuren 1 und 2 dargestellten Ausführungsbeispielen die Sensoreinrichtung 8 sowie der mindestens eine Sensor 8a am Anbaugerät 3 angeordnet ist. Das selbe gilt hier auch für die Rechnereinheit 10. Grundsätzlich ist es aber auch denkbar, dass einzelne oder alle dieser Komponenten an der Zugmaschine 2 angeordnet sind. Auch ist hier die Steuer- und Regeleinheit 6, die die Regelung des jeweiligen Parameters bewirkt, Bestandteil der Zugmaschine 2 und steuert hier insbesondere den Hauptantrieb 13 an. Grundsätzlich ist es aber auch denkbar, dass die Steuer- und Regeleinheit 6 Bestandteil des Anbaugeräts 3 ist und insbesondere Teil der Rechnereinheit 10 ist. Auch sind hier die Anzeigeeinheit 11 und die Bedieneinheit 12 Teil der Zugmaschine 2, was bevorzugt ist. Grundsätzlich wäre es aber auch denkbar, die Anzeigeeinheit 11 und/oder Bedieneinheit 12 am Anbaugerät 3 vorzusehen.

### Bezugszeichenliste

- 1: Landwirtschaftliche Arbeitsmaschine
- 2: Zugmaschine
- 3: Anbaugerät
- 4: Arbeitsorgan
- 5: Feldbestand
- 6: Steuer- und Regeleinheit
- 7: Untergrund
- 8: Sensoreinrichtung
- 9: Erfassungsbereich
- 10: Rechnereinheit
- 11: Anzeigeeinheit
- 12: Bedieneinheit
- 13: Hauptantrieb
- 14: Zapfwelle
- 15: Hydraulikkreislauf
- 16: Antrieb des Arbeitsorgans
- 17: Hydraulikzylinder
- F: Fahrtrichtung
- G: Getriebe
- M: Antriebsmotor

## Patentansprüche

1. Landwirtschaftliche Arbeitsmaschine mit einer Zugmaschine (2), insbesondere einem Traktor, und mit einem landwirtschaftlichen Anbaugerät (3) umfassend mindestens ein angetriebenes Arbeitsorgan (4) zur Bearbeitung eines Feldbestands (5),
**dadurch gekennzeichnet,**
**dass** eine Sensoreinrichtung (8) im Vorfeld des mindestens einen Arbeitsorgans (4) des Anbaugeräts (3) die Beschaffenheit des Feldbestands (5) erfasst und in Abhängigkeit von der erfassten Beschaffenheit eine Anpassung mindestens eines Parameters des Arbeitsorgans (4) oder mindestens eines der Arbeitsorgane (4) erfolgt, wobei der Parameter oder mindestens einer der Parameter die Antriebsdrehzahl des jeweiligen Arbeitsorgans (4) ist.

2. Landwirtschaftliche Arbeitsmaschine nach Anspruch 1, **dadurch gekennzeichnet, dass** die Sensoreinrichtung (8) als Beschaffenheit des Feldbestands (5) die Bestandsdichte von ungeerntetem Erntegut, die Gutdichte von auf dem Untergrund (7) abgelegtem, geerntetem Erntegut und/oder die Beschaffenheit des Untergrunds (7) erfasst.

3. Landwirtschaftliche Arbeitsmaschine nach Anspruch 1 oder 2, **dadurch gekennzeichnet, dass** das Anbaugerät (3) bezogen auf die Fahrtrichtung (F) der landwirtschaftlichen Arbeitsmaschine (1) vorne oder hinten an der Zugmaschine (2) angebaut ist.

4. Landwirtschaftliche Arbeitsmaschine nach einem der vorhergehenden Ansprüche, **dadurch gekennzeichnet, dass** das Anbaugerät (3) ein Mähwerk, ein Wender, ein Schwader, eine Ballenpresse oder ein Bodenbearbeitungsgerät ist, und/oder,
dass das Arbeitsorgan (4) eine Messereinheit eines Mähwerks, eine Kreiseleinheit eines Wenders, eine Kreiseleinheit eines Schwaders, eine Presseinheit einer Ballenpresse oder eine Bodenbearbeitungseinheit eines Bodenbearbeitungsgeräts ist.

5. Landwirtschaftliche Arbeitsmaschine nach einem der vorhergehenden Ansprüche, **dadurch gekennzeichnet, dass** die Sensoreinrichtung (8) mindestens einen Sensor (8a) in Form eines optischen Sensors, Ultraschallsensors, Radarsensors und/oder Lidar-Sensors umfasst.

6. Landwirtschaftliche Arbeitsmaschine nach einem der vorhergehenden Ansprüche, **dadurch gekennzeichnet, dass** die Sensoreinrichtung (8) der erfassten Beschaffenheit entsprechende Sensordaten generiert und an eine Rechnereinheit (10) überträgt, wobei die Rechnereinheit (10) basierend auf den Sensordaten einen Sollwert für die Antriebsdrehzahl und/oder mindestens einen weiteren Parameter des jeweiligen Arbeitsorgans (4) ermittelt und wobei eine Steuer-und Regeleinheit (6) in Abhängigkeit des Sollwerts automatisch eine Regelung der Antriebsdrehzahl und/oder des mindestens einen weiteren Parameters des jeweiligen Arbeitsorgans (4) bewirkt.

7. Landwirtschaftliche Arbeitsmaschine nach einem der Ansprüche 1 bis 5, **dadurch gekennzeichnet, dass** die Sensoreinrichtung (8) der erfassten Beschaffenheit entsprechende Sensordaten generiert und an eine Rechnereinheit (10) überträgt, wobei die Rechnereinheit (10) basierend auf den Sensordaten einen Sollwert für die Antriebsdrehzahl und/oder mindestens einen weiteren Parameter des jeweiligen Arbeitsorgans (4) ermittelt, wobei auf einer Anzeigeeinheit (11) in Abhängigkeit des Sollwerts eine Information angezeigt wird und wobei über eine Bedieneinheit (12) eine Regelung der Antriebsdrehzahl und/oder des mindestens einen weiteren Parameters des jeweiligen Arbeitsorgans (4) bewirkt werden kann.

8. Landwirtschaftliche Arbeitsmaschine nach Anspruch 6 oder 7, **dadurch gekennzeichnet, dass** die Regelung der Antriebsdrehzahl und/oder des mindestens einen weiteren Parameters des jeweiligen Arbeitsorgans (4) durch eine Regelung der Zapfwellendrehzahl der Zugmaschine (2), durch eine Regelung der Volumenströme eines Hydraulikmediums und/oder durch eine Regelung der Leistungsabgabe eines elektrischen Antriebs bewirkt wird.

9. Landwirtschaftliche Arbeitsmaschine nach einem der Ansprüche 6 bis 8, **dadurch gekennzeichnet, dass** die Sensoreinrichtung (8) oder der mindestens eine Sensor (8a) und/oder die Rechnereinheit (10) am Anbaugerät (3) angeordnet ist,
und/oder
dass die Steuer- und Regeleinheit (6), die Anzeigeeinheit (11) und/oder die Bedieneinheit (12) an der Zugmaschine (2) angeordnet ist.

10. Verfahren für die Ansteuerung einer landwirtschaftlichen Arbeitsmaschine (1) mit einer Zugmaschine (2), insbesondere einem Traktor, und mit einem landwirtschaftlichen Anbaugerät (3) umfassend mindestens ein angetriebenes Arbeitsorgan (4) zur Bearbeitung eines Feldbestands (5),
**dadurch gekennzeichnet,**
**dass** eine Sensoreinrichtung (8) im Vorfeld des mindestens einen Arbeitsorgans (4) des Anbaugeräts (3) die Beschaffenheit des Feldbestands (5) erfasst und in Abhängigkeit von der erfassten Beschaffenheit eine Anpassung mindestens eines Parameters des Arbeitsorgans (4) oder mindestens eines der Arbeitsorgane (4) erfolgt, wobei der Parameter oder mindestens einer der Parameter die Antriebsdrehzahl des jeweiligen Arbeitsorgans (4) ist.
